# EUROPÄISCHE PATENTSCHRIFT

(11) **EP 3 736 546 B1**
(45) Veröffentlichungstag und Bekanntmachung des Hinweises auf die Patenterteilung: **08.12.2021**
(21) Anmeldenummer: 19173513.3
(22) Anmeldetag: 09.05.2019
(51) Int. Cl.: G01F 23/284, G01S 13/88, G01S 7/02, G01S 13/42

(54) **FÜLLSTANDRADARGERÄT MIT ADAPTIVER SENDELEISTUNGSEINSTELLUNG**
FILL LEVEL RADAR WITH ADAPTIVE TRANSMISSION POWER
APPAREIL RADAR DE NIVEAU DE REMPLISSAGE À AJUSTEMENT ADAPTATIF DE LA PUISSANCE D'ÉMISSION

(43) Veröffentlichungstag der Anmeldung: 11.11.2020
(73) Patentinhaber: VEGA Grieshaber KG, 77709 Wolfach (DE)
(72) Erfinder: WELLE, Roland, 77756 Hausach (DE); FISCHER, Michael, 72275 Alpirsbach (DE); WEGEMANN, Uwe, 47443 Moers (DE); REIMELT, Ralf, 79110 Freiburg (DE)
(74) Vertreter: Maiwald Patent- und Rechtsanwaltsgesellschaft mbH

(56) Entgegenhaltungen:
- US-A1- 2008 282 793
- US-A1- 2018 335 332
- US-A1- 2018 372 530

## Beschreibung

### Gebiet der Erfindung

Die Erfindung betrifft Füllstandradarsysteme. Insbesondere betrifft die Erfindung ein Füllstandradargerät, das zur adaptiven Sendeleistungseinstellung eingerichtet ist, eine Füllstandradarantenne für ein derartiges Füllstandradargerät, ein Verfahren zur adaptiven Sendeleistungseinstellung eines Füllstandradargeräts, ein Programmelement und ein computerlesbares Medium.

### Hintergrund

Füllstandradargeräte zur Bestimmung eines Füllstandes eines Füllguts oder der Höhe bzw. des Volumens eines Schüttguts verwenden hochfrequente elektromagnetische Signale als Sendesignale, die in Richtung des Füllguts abgestrahlt werden. Diese Geräte werden im Allgemeinen innerhalb einer Industrieanlage in Behältern oder außerhalb geschlossener Behälter in Installationen im Freifeld betrieben.

Der Betrieb dieser Geräte basiert auf dem Aussenden und Empfangen hochfrequenter elektromagnetischer Funksignale, typischerweise in den in Europa und USA zu diesem Zweck regulierten Frequenzbändern um 6 GHz, 10 GHz, 24 GHz, oder aber zwischen 57 GHz und 64 GHz, oder im Bereich von 75 GHz und 85 GHz.

Um andere Spektrumnutzer "zu schützen" und eine Koexistenz verschiedener Funkdienste zu gewährleisten, existieren verschiedene regulatorische Anforderungen. Insbesondere gilt es, primäre Funkdienste vor Störstrahlung zu schützen, insbesondere solche, welche gegenüber sekundären Funkdiensten oder Funkanwendungen mit geringer Reichweite (Short Range Devices (SRD)) einen Schutzstatus genießen. Füllstandradargeräte werden den Funkanwendungen mit geringer Reichweite zugeordnet. Primäre Funkdienste sind beispielsweise Richtfunkdienste zur Kommunikation und Datenübertragung, Rundfunkdienste, Flugfunkdienste oder Radioastronomiestationen. Aus diesem Grund müssen beispielsweise im Freifeld bestimmte Installationsbedingungen bei Radar-Füllstandgeräten eingehalten werden und die Richtcharakteristik der verwendeten Antenne muss ebenfalls bestimmte Kriterien einhalten (vgl. Norm EN 302 279 V2.1.1, Kapitel 4.6).

US 2018/0335332 A1 beschreibt ein Füllstandradargerät mit einer rotierenden Antenne, bei der in Abhängigkeit von der gewünschten Sensitivität die Sendeleistung erhöht werden kann.

### Zusammenfassung der Erfindung

Es ist eine Aufgabe der vorliegenden Erfindung, ein Füllstandradargerät bereitzustellen, welches eine übermäßige Abstrahlung von Störstrahlung vermeidet.

Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Füllstandradargerät, das zur adaptiven Sendeleistungseinstellung eingerichtet ist. Es weist eine Antenneneinrichtung auf, die zum Abstrahlen eines Sendesignals in Richtung des Füllguts oder Schüttguts eingerichtet ist. Es ist eine Abstrahlwinkelbestimmungseinrichtung vorgesehen, die zum Bestimmen der Abstrahlrichtung des Sendesignals eingerichtet ist. Darüber hinaus weist das Füllstandradargerät eine Steuereinrichtung auf, die eingerichtet ist zum Einstellen einer maximal zulässigen Sendeleistung des Sendesignals auf Basis der vom Gerät festgestellten Abstrahlrichtung und einer Abstrahlcharakteristik der Antenneneinrichtung.

Die Sendeleistungseinstellung kann adaptiv erfolgen, da die maximale Sendeleistung vom Gerät geändert werden kann, wenn das Gerät verkippt bzw. die Abstrahlrichtung des Sendesignals verändert wird.

Neben der mechanischen Verkippung des Geräts kann die Abstrahlrichtung gemäß einer Ausführungsform der Erfindung auch in Art einer elektronischen Strahlsteuerung geändert werden. In diesem Fall ist eine Gruppen- oder Arrayantenne vorgesehen, deren einzelne Sendeelemente entsprechend angesteuert werden.

Gemäß einer Ausführungsform der Erfindung weist das Füllstandradargerät einen Datenspeicher auf, auf dem die Abstrahlcharakteristik der Antenneneinrichtung und/oder eine Berechnungsvorschrift zum Berechnen der Abstrahlcharakteristik gespeichert ist.

Dieser Datenspeicher kann auch außerhalb des Füllstandradargeräts angeordnet sein, beispielsweise in einer Cloud oder auf einem Server, mit dem das Messgerät kommuniziert. Insbesondere kann vorgesehen sein, dass die notwendigen Berechnungen der maximal zulässigen Sendeleistung des Sendesignals außerhalb des Messgeräts durchgeführt werden und dann das Messgerät lediglich das Endergebnis mitgeteilt bekommt, um die Sendeleistung entsprechend regelkonform anzupassen.

Gemäß einer weiteren Ausführungsform der Erfindung weist das Füllstandradargerät eine Kommunikationsschnittstelle auf, wobei die Steuereinrichtung eingerichtet ist, die Abstrahlcharakteristik über die Kommunikationsschnittstelle von einem externen Gerät anzufordern.

Gemäß einer weiteren Ausführungsform der Erfindung weist das Füllstandradargerät eine Erkennungseinrichtung auf, die eingerichtet ist zum Identifizieren der Antenneneinrichtung.

Die Erkennungseinrichtung weist beispielsweise einen eigenen Datenspeicher auf, der an der Antenneneinrichtung angebracht ist und Identifikationsdaten der Antenneneinrichtung speichert. Die Erkennungseinrichtung kann eingerichtet sein, die Identifikationsdaten zum Identifizieren der Antenneneinrichtung an die Steuereinrichtung des Messgeräts zu übertragen.

Hierfür kann beispielsweise ein RFID Chip verwendet werden.

Gemäß einer weiteren Ausführungsform der Erfindung weist das Radarfüllstandmessgerät eine Positionsbestimmungseinrichtung auf, die eingerichtet ist zum Bestimmen der Position des Füllstandradargeräts, wobei die Steuereinrichtung eingerichtet ist, die Sendeleistung des Sendesignals auf Basis der Position des Füllstandradargeräts einzustellen.

So kann das Messgerät beispielsweise feststellen, in welchem Land es sich befindet und, daran anknüpfend, welche Vorschriften hinsichtlich der Emission von Radarsignalen derzeit einzuhalten sind.

Gemäß einer weiteren Ausführungsform der Erfindung ist die Steuereinrichtung eingerichtet, die Sendeleistung des Sendesignals auf Basis des Winkels der Abstrahlrichtung des Sendesignals zur Oberfläche des Füllguts einzustellen.

So kann beispielsweise vorgesehen sein, dass, wenn die Hauptabstrahlrichtung der Antenne senkrecht zur Füllgutoberfläche ausgerichtet ist, die Sendeleistung höher eingestellt wird, als wenn die Hauptabstrahlrichtung des Sendesignals nicht senkrecht zur Füllgutoberfläche eingestellt ist. In letzterem Fall wird ein nicht unerheblicher Teil des Sendesignals nach der Reflexion von der Füllgutoberfläche an der Antenne vorbeilaufen.

Gemäß einer weiteren Ausführungsform der Erfindung weist die Abstrahlwinkelbestimmungseinrichtung einen Neigungssensor auf, sodass sich der Abstrahlwinkel sehr effizient und genau bestimmen lässt.

Ein weiterer Aspekt der Erfindung betrifft eine Füllstandradarantenne für ein oben und im Folgenden beschriebenes Füllstandradargerät, welches einen Datenspeicher aufweist, der an der Füllstandradarantenne angebracht ist und Identifikationsdaten der Füllstandradarantenne speichert. Der Datenspeicher ist eingerichtet, die Identifikationsdaten zum Identifizieren der Füllstandradarantenne an die Steuereinrichtung des Füllstandradargeräts oder eine externe Stelle zu übertragen.

Ein weiterer Aspekt der Erfindung betrifft ein Verfahren zur adaptiven Sendeleistungseinstellung eines Füllstandradargeräts, bei dem die Abstrahlrichtung des Sendesignals einer Antenneneinrichtung durch eine Abstrahlwinkelbestimmungseinrichtung bestimmt wird. Auf Basis der derart bestimmten Abstrahlrichtung und einer Abstrahlcharakteristik der verwendeten Antenneneinrichtung wird eine Sendeleistung des Sendesignals durch eine Steuereinrichtung eingestellt, welche den unter diesen Bedingungen maximal zulässigen Wert nicht überschreitet. Diese Steuereinrichtung kann im Füllstandradargerät vorgesehen sein oder, zumindest teilweise, auch in einem externen Gerät. Daraufhin wird dann das Sendesignal mit der Antenneneinrichtung in Richtung des Füllguts abgestrahlt, und zwar mit einer Sendeleistung, die der festgestellten maximal zulässigen Sendeleistung oder weniger entspricht.

Ein weiterer Aspekt der Erfindung betrifft ein Programmelement, das, wenn es auf einer Steuereinrichtung eines Füllstandradargeräts ausgeführt wird, das Füllstandradargerät anleitet, die oben und im Folgenden beschriebenen Schritte durchzuführen.

Ein weiterer Aspekt der Erfindung betrifft ein computerlesbares Medium, auf dem das oben beschriebene Programmelement gespeichert ist.

Das Computerprogramm kann beispielsweise in einem Arbeitsspeicher einer Datenverarbeitungseinrichtung, wie etwa eines Datenprozessors geladen und/oder gespeichert sein, wobei die Datenverarbeitungseinrichtung auch Teil einer Ausführungsform der vorliegenden Erfindung sein kann. Diese Datenverarbeitungseinrichtung kann dazu eingerichtet sein, Verfahrensschritte des oben beschriebenen Verfahrens durchzuführen. Die Datenverarbeitungseinrichtung kann ferner dazu eingerichtet sein, das Computerprogramm bzw. das Verfahren automatisch auszuführen und/oder Eingaben eines Benutzers auszuführen. Das Computerprogramm kann auch über ein Datennetzwerk, wie etwa das Internet, bereitgestellt und von einem solchen Datennetzwerk aus in den Arbeitsspeicher der Datenverarbeitungseinrichtung heruntergeladen werden. Das Computerprogramm kann auch eine Aktualisierung eines bereits vorhandenen Computerprogramms umfassen, wodurch das vorhandene Computerprogramm beispielsweise zum Ausführen des oben beschriebenen Verfahrens befähigt werden kann.

Das computerlesbare Speichermedium kann insbesondere, aber nicht notwendigerweise, ein nichtflüchtiges Medium sein, das sich insbesondere zum Speichern und/oder Verteilen eines Computerprogramms eignet. Das computerlesbare Speichermedium kann eine CD-ROM, eine DVD-ROM, ein optisches Speichermedium, ein Festkörpermedium oder ähnliches sein, das zusammen mit oder als Teil anderer Hardware geliefert wird. Zusätzlich oder alternativ dazu, kann das computerlesbare Speichermedium auch in anderer Form verteilt bzw. vertrieben werden, beispielsweise über ein Datennetzwerk, wie etwa das Internet oder andere drahtgebundene oder drahtlose Telekommunikationssysteme. Hierzu kann das computerlesbare Speichermedium beispielsweise als ein oder mehrere Datenpakete ausgeführt sein.

Im Folgenden werden mit Verweis auf die Figuren Ausführungsformen der Erfindung beschrieben. Die Darstellungen sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt einen Messaufbau mit einem Füllstandradargerät.
Fig. 2A zeigt einen weiteren Messaufbau mit einem verkippten Füllstandradargerät.
Fig. 2B zeigt eine mögliche Abhängigkeit von Sendeleistung und Neigungswinkel.
Fig. 3 zeigt ein Füllstandradargerät gemäß einer Ausführungsform.
Fig. 4 zeigt ein Füllstandradargerät gemäß einer weiteren Ausführungsform.
Fig. 5 zeigt ein Füllstandradargerät gemäß einer weiteren Ausführungsform.
Fig. 6 zeigt ein Füllstandradargerät gemäß einer weiteren Ausführungsform.
Fig. 7 zeigt ein Flussdiagramm eines Verfahrens gemäß einer Ausführungsform.

Detaillierte Beschreibung von Ausführungsformen.

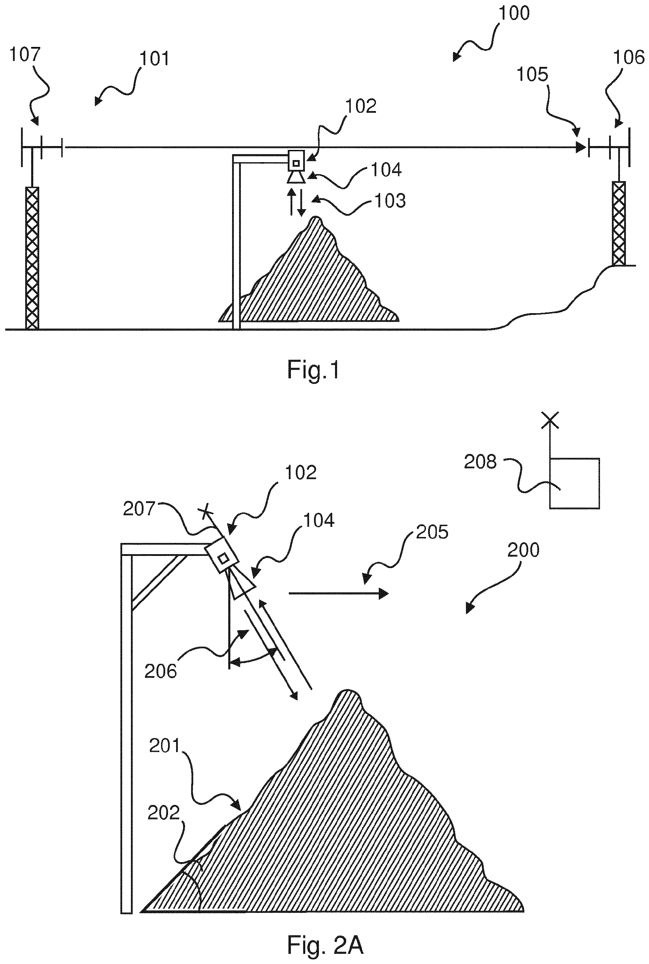

Fig. 1 zeigt einen Messaufbau mit einem Füllstandradargerät 102 zur Schüttgutmessung. Viele Funkempfänger empfangen Signale aus Richtungen mit niedrigen Elevationswinkeln der Empfangsantenne. Insbesondere bei bodengebundenen Richtfunkdiensten 101 mit nahezu horizontaler Aussendung und Empfangsrichtung oder bei Mobilfunkdiensten kann dies beobachtet werden.

Radar-Füllstandmessgeräte 102 werden im Freifeld im Allgemeinen mit einer Antennenausrichtung senkrecht nach unten (Lotrichtung) betrieben. Bei dieser Ausrichtung stehen die Hauptstrahlrichtung 103 der kombinierten Sende- und Empfangsantenne 104 des Füllstandmessgerätes 102 und die Hauptempfangsrichtung 105 der Empfangsantenne 106 der Richtfunkstrecke 101 senkrecht zueinander.

In diesem Fall kann davon ausgegangen werden, dass die Signalentkopplung beider Funkdienste maximal ist und somit die Beeinflussung des Richtfunkempfängers 106 oder des Richtfunksenders 107 durch den Füllstandsensor 102 minimal wird. Die Störung beispielsweise des Richtfunkempfängers 106 durch den Füllstandsensor 102 kann in diesem Fall nur über Mehrwegeausbreitung durch Reflexion, Beugung, Streuung, welche jedoch zusätzliche Signaldämpfung verursacht, oder direkt über die Nebenkeulen der Füllstandradarantenne erfolgen. Die Richtfaktoren der Nebenkeulen des Antennendiagramms im Winkelbereich um 90° zur Hauptstrahlrichtung sind insbesondere bei den stark gerichteten Füllstandradarantennen 104 sehr klein im Vergleich zum Richtfaktor in Hauptstrahlrichtung 103. In beiden Fällen ist somit das Störpotenzial am Ort des Empfängers 106 erheblich reduziert. Geeignete Antennenvarianten für Füllstandradargeräte mit hoher Richtwirkung sind beispielsweise Horn- und Hohlleiterstrahler, Antennen mit dielektrischen Linsen, Parabolantennen, Planarantennen und Gruppenantennen.

In bestimmten Fällen kann es jedoch notwendig sein, den kompletten Radar-Füllstandsensor mit angebauter Antenne oder nur die Antenne oder lediglich die Hauptstrahlrichtung der Antenne um einen bestimmten Winkel 206 zur Lotrichtung zu schwenken, so dass überhaupt ein Echosignal von der Füllgutoberfläche zurückreflektiert wird. Dies ist ein Fig. 2A gezeigt. Ein Schwenken lediglich der Hauptstrahlrichtung kann beispielsweise mit einer phasengesteuerten Gruppenantenne erreicht werden. Durch entsprechende Einstellung z.B. der integrierten Phasenschieber, ist eine elektronische Strahlschwenkung ohne Veränderung des mechanischen Installationswinkels der Antenne zur Lotrichtung möglich.

Das Schwenken der ganzen Antenne oder zumindest der Antennenhauptkeule ist insbesondere dann vorteilhaft, wenn auf nicht ebenen Füllgutoberflächen 201 mit bestimmten Schüttwinkeln 202 gemessen werden soll. Der Füllstandsensor 102 ist so ausgerichtet, dass die Hauptstrahlrichtung der kombinierten Sende- und Empfangsantenne 102 in Richtung der Schüttkegelspitze zeigt und vorzugsweise senkrecht auf der zu messenden Oberfläche steht. Wäre der Füllstandsensor mit Hauptstrahlrichtung senkrecht nach unten montiert, würde ein Großteil der Signalleistung von der schrägen Schüttgutoberfläche 201 wegreflektiert werden und würde nicht mehr zurück zum Füllstandsensor 102 gelangen. Eine Füllstandmessung wäre in diesem Fall entweder überhaupt nicht mehr oder nur mit erheblich reduziertem Signal-Rauschabstand und damit auch mit reduzierter Messsicherheit möglich.

Bei einer von der Lotrichtung weggeneigten Füllstandradarantenne und/oder elektronisch geschwenkten Antennenhauptkeule steigt jedoch wiederum das Störpotenzial gegenüber anderen Spektrumnutzern und Funkdiensten. Dies ist der Fall, da die Abstrahlung des Füllstandradars in horizontaler Richtung 205 nun über Nebenkeulen mit höheren Richtfaktoren erfolgt, d.h. der Störpegel am Ort des fremden Empfängers ist höher im Vergleich zu der Situation mit einer senkrecht nach unten ausgerichteten Füllstandradarantenne. In diesem Zusammenhang ist anzumerken, dass bei Richtantennen, wie sie im Allgemeinen bei Füllstandradargeräten eingesetzt werden, Richtfaktoren von Nebenkeulen mit zunehmenden Ablagewinkeln zur Hauptstrahlrichtung stark abnehmen.

Durch das Neigen der Füllstandradarantenne und/oder das elektronische Schwenken der Hauptkeule einer phasengesteuerten Gruppenantenne können optimale Reflexionsbedingungen auf der Füllgutoberfläche hergestellt werden und damit eine optimale Messsicherheit gewährleistet werden. Um gleichzeitig das Störpotenzial gegenüber anderen Funkdiensten nicht zu erhöhen, ist eine adaptive Sendeleistungseinstellung vorgesehen. Das Messgerät 102 kann eine Kommunikationsschnittstelle 207 aufweisen, über welche es mit einem externen Gerät 208, beispielsweise einem Server oder einer Cloud, Daten austauscht.

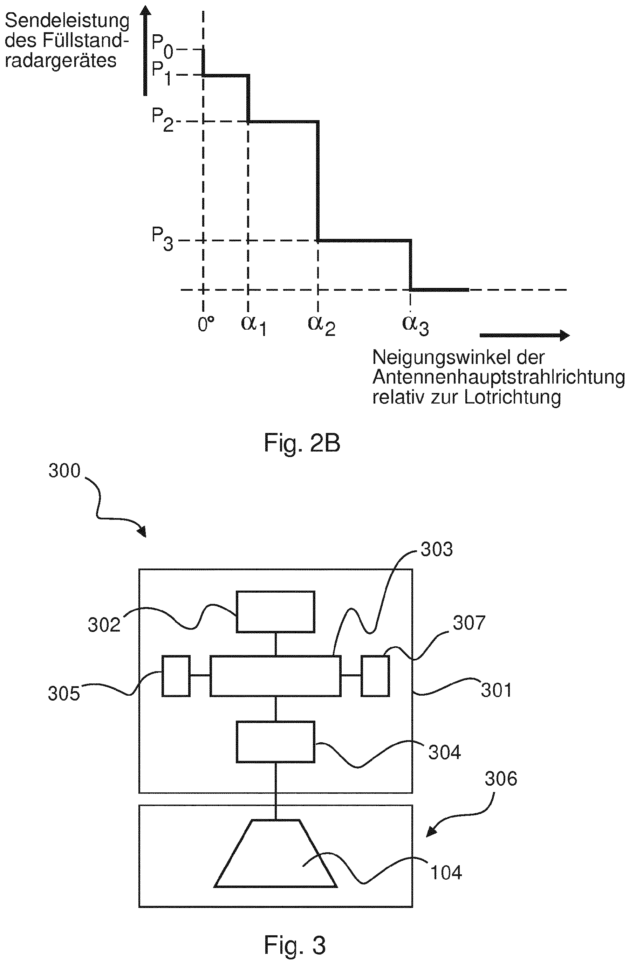

Durch die Möglichkeit, die Hauptstrahlrichtung der Antenne relativ zur Lotrichtung zu neigen, kann einerseits sichergestellt werden, dass die Reflexionsverhältnisse, z.B. bei der Messung gegen Schüttgutoberflächen unter bestimmten Schüttwinkeln 202, optimal werden, d.h. ein möglichst großer Teil des Sendesignals wieder in Richtung der Antenne des Füllstandmessgerätes zurückreflektiert wird. Um gleichzeitig das Störpotenzial gegenüber anderen Spektrumnutzern nicht zu erhöhen, wird in Abhängigkeit des Neigungswinkels der Hauptstrahlrichtung zur Lotrichtung und der Strahlungscharakteristik der verwendeten Antenne, die Sendeleistung des Füllstandsensors reduziert. Eine zuverlässige Messung mit ausreichender Messsicherheit kann so bei optimalen Relexionsbedingungen an der Füllgutoberfläche vielfach auch bei reduzierter Sendeleistung sichergestellt werden. Die Absenkung der Sendeleistung des Füllstandmessgerätes mit zunehmendem Neigungswinkel der Antennenhauptstrahlrichtung relativ zur Lotrichtung lässt sich beispielsweise in mehreren Stufen realisieren, wie in Fig. 2B dargestellt.

Der Kurvenverlauf in Fig. 2B ergibt sich aus der Strahlungscharakteristik der verwendeten Antenne und der maximalen Sendeleistung des Füllstandsensors 102.

Bei senkrecht nach unten ausgerichteter Antennenhauptstrahlrichtung (0°) wird mit höchster Leistung Po gesendet. Im Winkelbereich größer 0° bis zum Neigungswinkel α₁ wird die Sendeleistung auf einen Wert P₁ abgesenkt. Im Winkelbereich größer α₁ bis α₂ erfolgt eine Absenkung auf den Wert P₂, usw.

Gemäß einer Ausführungsform, die in Fig. 3 gezeigt ist, weist die Elektronik- bzw. Steuereinrichtung 301des Füllstandradargeräts 300 ein Netzteil 302 auf, welches alle Komponenten der Elektronikeinrichtung 301 mit elektrischer Energie versorgt, einer Steuerungs- und Auswerteeinrichtung 303, dem Hochfrequenzteil 304 und der Winkelbestimmungseinrichtung 305. Die Winkelbestimmungseinrichtung kann beispielsweise aus einem kommerziell verfügbaren elektronischen Neigungssensor bestehen, welcher SMT-bestückbar ist und in die Elektronikeinrichtung 301 oder direkt an oder in die Antenne 306 integriert werden kann. Selbstverständlich sind auch mechanische oder elektromagnetische Vorrichtungen denkbar, die die Lage der Antenne 306 in Bezug auf die Lotrichtung elektronisch, induktiv, kapazitiv oder optisch erfassen.

Im Fall einer phasengesteuerten Gruppenantenne wird die Richtung der Hauptkeule durch die Einstellung der integrierten Phasenschieber und zusätzlich des mechanischen Installationswinkels der Antennenebene zur Lotrichtung bestimmt. In diesem Fall besteht die Winkelbestimmungseinrichtung vorzugsweise aus einem Neigungssensor und aus einer Berechnungsvorschrift, wie aus den einzelnen Einstellungen der Phasenschieber die Hauptstrahlrichtung in Bezug auf die Antennenebene ermittelt werden kann.

An die Elektronikeinrichtung 301 wird die kombinierte Sende- und Empfangsantenne 306 angeschlossen. Der Einsatz von getrennten Sende- und Empfangsantennen ist in diesem Zusammenhang jedoch ebenfalls möglich. Der Radarsensor 300 wird im Allgemeinen von Fachpersonal installiert und optimal auf die zu messende Füllgutoberfläche 201 ausgerichtet. Hierbei kann es vorkommen, dass die Antenne 306 mechanisch und/oder die Hautkeule der Antenne elektronisch geneigt werden muss, um optimale Reflexionsbedingungen an der Füllgutoberfläche zu schaffen. Die Winkelbestimmungseinrichtung 305 erfasst hierbei den Neigungswinkel der Antennenhauptstrahlrichtung zur Lotrichtung und übermittelt den Wert an die Steuerungs- und Auswerteeinrichtung 303. Zusammen mit der Strahlungscharakteristik der verwendeten Antenne, die beispielsweise als Berechnungsformel oder als Tabellenwerte in einem Speicherbereich 307 der Steuerungs- und Auswerteeinrichtung 303 vorliegen und im Werk bei der Produktion des Sensors eingespeichert wurden, ermittelt die Steuerungs- und Auswerteeinrichtung 303 die für diese Situation maximal mögliche Sendeleistung, um noch keine Störungen in Komponenten anderer Funkdienste 106, 107 zu verursachen, die sich möglicherweise in der näheren Umgebung befinden und damit durch ungewollte Einstrahlung aus dem Radar-Füllstandsensor besonders gefährdet sind.

Die maximal mögliche Sendeleistung oder eine beliebig kleinere Sendeleistung wird von der Steuerungs- und Auswerteeinrichtung 303 an den Hochfrequenzteil 304 weitergemeldet. Dort wird beispielsweise durch die entsprechende Einstellung eines variablen Dämpfungsgliedes oder eines Verstärkers mit variabler Verstärkung die gewünschte Sendeleistung eingestellt.

Während des Lebenszyklus der Messstelle bzw. des Radar-Füllstandsensors 102 können sich Anforderungen verändern, die eine Rekonfiguration des Füllstandsensors notwendig machen. Um dies zu erleichtern ist es bei Füllstandsensoren vielfach möglich, die Elektronikeinrichtung 301 und/oder die Antenne 306 zu tauschen und auf die neue Messsituation optimal anzupassen. Werden nun die Antenne 306 und/oder die Elektronikeinrichtung 301 getauscht, müssen die korrekten Antennendaten wieder im Speicher 307 hinterlegt werden. Idealerweise sind die passenden Antennendaten bereits im Speicher 307 vorhanden und müssen lediglich ausgewählt und aktiviert werden. Dieser Vorgang kann bei der Rekonfiguration des Sensors und beim Tausch der Antenne und/oder der Elektronikeinrichtung vom Bedienpersonal erledigt werden, birgt aber gleichzeitig durch den manuellen Eingriff die Gefahr von Falscheinstellungen, da vielfach gleichartig aussehende Antennenvarianten mit doch deutlich unterschiedlichen Richtcharakteristiken vorliegen. Im schlimmsten Fall führt eine derartige Fehlbedienung zu erhöhter Abstrahlung von elektromagnetischer Energie des Radar-Füllstandsensors, welche wiederum in einem anderen Funkdienst unerwünschte Störungen verursacht.

Um dies zu umgehen, wird ein weiteres Ausführungsbeispiel eines Radar-Füllstandsensors 400 vorgeschlagen. Die Antenneneinrichtung 402 ist hierbei mit einer Erkennungseinrichtung 403 ausgestattet, welche eine eindeutige Identifizierung der Antenne erlaubt. Die Erkennungseinrichtung 403, die an oder in der Antenne oder in der zur Antenne gehörenden Einkopplung angebracht ist, weist einen Datenspeicher 405 auf, und wird von der Ausleseeinrichtung 404, welche sich in der Elektronikeinrichtung 401 befindet, ausgelesen bzw. übermittelt dieser Identifikationsdaten der Antenneneinrichtung. Somit ist eine eindeutige Identifizierung der im Einzelfall verwendeten Antennenvariante und damit auch deren Antennencharakteristik möglich und die Sendepegelabsenkung kann in Abhängigkeit des von der Winkelbestimmungseinrichtung 305 erfassten Neigungswinkels der Hauptstrahlrichtung automatisiert erfolgen. Die Kommunikation zwischen Erkennungseinrichtung 403 und Ausleseeinrichtung 404 erfolgt vorzugsweise drahtlos mit einer beliebigen Funktechnologie zur Datenübertragung, beispielsweise mit RFID-Technologie (Radio Frequency Identification). Selbstverständlich sind hierzu auch andere Nahbereichsfunktechnologien wie z.B. Bluetooth, ZigBee, WLAN, etc. geeignet. Ebenso ist ein drahtgebundenes Auslesen der Erkennungseinrichtung 403 möglich. Dies erfordert jedoch eine zusätzliche Steckverbindung zwischen Elektronikeinrichtung 401 und Antenne 402.

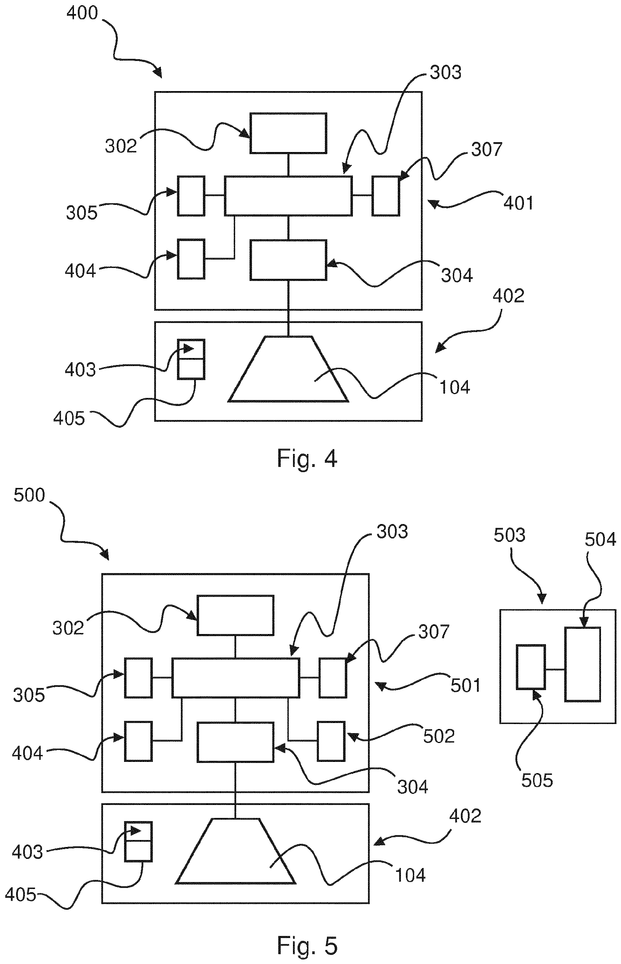

Kommen im Laufe des Produktlebenszyklus des Radar-Füllstandsensors neue Antennenvarianten hinzu oder werden Antennenkonstruktionen verändert, die Einfluss auf die Richtcharakteristik haben, sind die korrekten Antennendaten womöglich nicht im Speicher 307 der in einer Messstelle verbauten Sensoren 300 und 400 vorhanden und müssten bei einem entsprechenden Antennenwechsel an der Messstelle nachträglich wieder im Speicher hinterlegt werden. Dies ist nur mit einem Zugriff von außen, beispielsweise mit Hilfe einer drahtgebundenen oder drahtlosen Kommunikationsverbindung möglich und erfordert einen Serviceeinsatz, welcher Erfahrungsgemäß mit einem nicht unerheblichen Aufwand verbunden ist. Um diesbezüglich Abhilfe zu schaffen, wird ein weiteres Ausführungsbeispiel in Fig. 5 vorgeschlagen.

Die Antennendaten sind bei dieser Ausführungsform in einer Datenbank 503 gespeichert, die sich an einem beliebigen Ort befinden kann. Ein Zugriff auf die im Speicher 504 liegenden Daten und deren Aktualisierung ist dort jederzeit ohne kostenintensive Serviceeinsätze möglich. Bei einem Wechsel der Antenne 402 am Radar-Füllstandsensor 500 erfolgt zunächst die automatische Identifizierung der neuen Antenne wie im Ausführungsbeispiel in Fig. 4 zuvor beschrieben. Danach werden die korrekten Antennendaten beispielsweise drahtlos von der Datenbank zum Füllstandsensor übertragen. Mit den Antennendaten und dem von der Winkelbestimmungseinrichtung 305 bestimmten Neigungswinkel der Antennenhauptkeule zur Lotrichtung ermittelt die Steuerungs- und Auswerteeinrichtung 303 die für diese Situation maximal mögliche Sendeleistung und stellt diese oder eine beliebig kleinere Sendeleistung im Hochfrequenzteil 304 ein. Die Anfrage der aktuellen Antennendaten erfolgt vom Füllstandsensor 500 vorzugsweise über eine drahtlose Kommunikationsverbindung mit entsprechenden Sende- und Empfangseinrichtungen 502, 505 im Füllstandsensor 500 und in der Datenbank 503. Hierzu eignet sich beispielsweise eine Mobilfunkverbindung.

Um die Koordination mit anderen Funkdiensten, insbesondere primären Funkdiensten, zu verbessern und somit das begrenzt vorhandene Funkspektrum optimal auszunutzen, wird ein weiteres Ausführungsbeispiel vorgeschlagen. Es umfasst einen Radar-Füllstandsensor 600 nach einem der Ausführungsbeispiele aus Fig. 3 bis Fig. 5, welcher zusätzlich eine Positionsbestimmungseinrichtung 601 (z.B. GPS, Glonass, Galileo, Mobilfunk) und eine drahtlose Funkschnittstelle 602 enthält. Über die Positionsbestimmungseinrichtung 601 ermittelt der Füllstandsensor selbst seine exakte Position auf der Erdoberfläche und gibt diese über die drahtlose Kommunikationsschnittstelle 602, 605 an einen zentralen Server 603 weiter. Der zentrale Server beinhaltet eine Datenbank 604, die die Standortdaten von allen Funkdiensten enthält, die vor schädlicher Strahlung des Füllstandsensors geschützt werden sollen. Beispielsweise sind das die Standortdaten der Sender 107 und Empfänger 106 von primären und/oder sekundären Funkdiensten. Befindet sich der Radar-Füllstandsensor in der Nähe eines solchen Funkdienstes, erfolgt die Reduzierung der Sendeleistung in Abhängigkeit des Neigungswinkels und der Antennencharakteristik wie in einem der Ausführungsbeispiele in Fig. 3 bis 5 beschrieben. Befindet sich kein Sender oder Empfänger eines zu schützenden Funkdienstes in Reichweite des Füllstandsensors, erfolgt keine Reduzierung der Sendeleistung bei der Füllstandmessung. Dieses Verfahren ist insbesondere auch dann vorteilhaft, wenn Spektrumzuteilungen von Regulierungsbehörden in Zukunft erfolgen und dadurch neuartige Funkdienste hinzukommen, welche in der Nähe von Radar-Füllstandsensoren installiert werden. Hierzu ist es jedoch notwendig, dass der Füllstandsensor 600 die Datenbank 604 mit den Standortdaten der zu schützenden Funkdienste regelmäßig über die Funkschnittstelle 602, 605 überprüft.

Es kann als ein Kernaspekt der vorliegenden Offenbarung angesehen werden, die Einführung einer adaptiven Sendeleistungseinstellung in einen Radar-Füllstandsensor zu implementieren, welche in Abhängigkeit der Antennenhauptstrahlrichtung in Bezug zur Lotrichtung und der Strahlungscharakteristik der verwendeten Antenne, die für diese Situation maximal verträgliche Sendeleistung bestimmt, und die tatsächlich verwendete Sendeleistung auf einen Wert kleiner oder gleich der maximal verträglichen Sendeleistung einstellt, ohne den Störpegel an Orten anderer Spektrumnutzer zu erhöhen. Zu diesem Zweck wird eine Winkelbestimmungseinrichtung in das Füllstandmessgerät integriert, die die Abweichung der Hauptstrahlrichtung der Antenne zur Lotrichtung erfasst. Ferner muss der Zugriff auf die Strahlungscharakteristik der verwendeten Antenne gewährleistet sein.

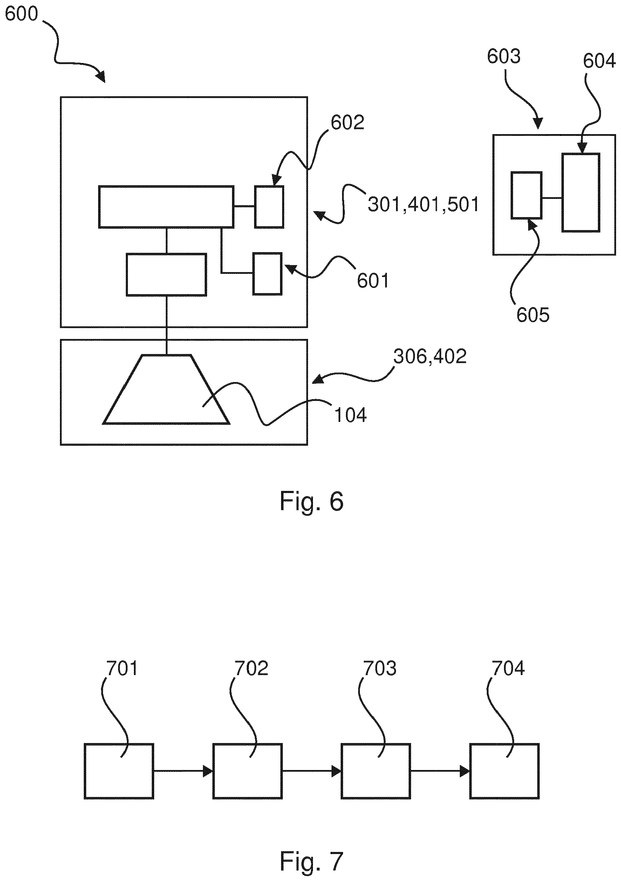

Fig. 7 zeigt ein Flussdiagramm eines Verfahrens gemäß einer Ausführungsform. In Schritt 701 wird die Abstrahlrichtung des Sendesignals einer Antenneneinrichtung bestimmt, indem hierfür beispielsweise eine im Füllstandmessgerät integrierte Abstrahlwinkelbestimmungseinrichtung verwendet wird. In Schritt 702 ruft die Steuereinrichtung Daten aus einem Speicher ab, welche die Abstrahlcharakteristik der verwendeten Antenneneinrichtung beschreiben. Alternativ oder zusätzlich wird die Abstrahlcharakteristik der Antenneneinrichtung von der Steuereinrichtung unter Anwendung einer Berechnungsvorschrift berechnet. In Schritt 703 wird dann auf Basis der Abstrahlrichtung und der Abstrahlcharakteristik die maximal zulässige Sendeleistung für das Sendesignal berechnet und die Sendeleistung wird in Schritt 704 so eingestellt, dass sie höchstens der maximal zulässigen Sendeleistung entspricht.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandradargerät (102), eingerichtet zur adaptiven Sendeleistungseinstellung, aufweisend:
eine Antenneneinrichtung (104), eingerichtet zum Abstrahlen eines Sendesignals in Richtung eines Füllguts;
eine Abstrahlwinkelbestimmungseinrichtung (305), eingerichtet zum Bestimmen der Abstrahlrichtung des Sendesignals;
eine Steuereinrichtung (301), **dadurch gekennzeichnet, dass** die Steuereinrichtung zum Einstellen einer Sendeleistung des Sendesignals auf Basis der Abstrahlrichtung und einer Abstrahlcharakteristik der Antenneneinrichtung eingerichtet ist.

2. Füllstandradargerät (102) nach Anspruch 1, weiter aufweisend:
einen Datenspeicher (307), auf dem die Abstrahlcharakteristik der Antenneneinrichtung (104) oder eine Berechnungsvorschrift zum Berechnen der Abstrahlcharakteristik gespeichert ist.

3. Füllstandradargerät (102) nach Anspruch 1 oder 2, weiter aufweisend:
eine Kommunikationsschnittstelle (207);
wobei die Steuereinrichtung (301) eingerichtet ist, die Abstrahlcharakteristik über die Kommunikationsschnittstelle von einem externen Gerät (208) anzufordern.

4. Füllstandradargerät (102) nach einem der vorhergehenden Ansprüche, weiter aufweisend:
eine Erkennungseinrichtung (403, 404), eingerichtet zum Identifizieren der Antenneneinrichtung (104).

5. Füllstandradargerät (102) nach Anspruch 4,
wobei die Erkennungseinrichtung (403, 404) einen Datenspeicher (405) aufweist, der an der Antenneneinrichtung (104) angebracht ist und Identifikationsdaten der Antenneneinrichtung speichert;
wobei die Erkennungseinrichtung eingerichtet ist, die Identifikationsdaten zum Identifizieren der Antenneneinrichtung an die Steuereinrichtung (301) zu übertragen.

6. Füllstandradargerät (102) nach einem der vorhergehenden Ansprüche, weiter aufweisend:
eine Positionsbestimmungseinrichtung (601), eingerichtet zum Bestimmen der Position des Füllstandradargeräts;
wobei die Steuereinrichtung (301) eingerichtet ist, die maximale Sendeleistung des Sendesignals auf Basis der Position des Füllstandradargeräts einzustellen.

7. Füllstandradargerät (102) nach einem der vorhergehenden Ansprüche,
wobei die Steuereinrichtung (301) eingerichtet ist, die maximale Sendeleistung des Sendesignals auf Basis des Winkels der Abstrahlrichtung des Sendesignals zur Oberfläche des Füllguts einzustellen.

8. Füllstandradargerät (102) nach einem der vorhergehenden Ansprüche,
wobei die Abstrahlwinkelbestimmungseinrichtung (305) einen Neigungssensor aufweist.

9. Füllstandradargerät (102) nach einem der vorhergehenden Ansprüchen, aufweisend:
eine Füllstandradarantenne (306, 402); einen Datenspeicher (405), der an der Füllstandradarantenne (306, 402) angebracht ist und Identifikationsdaten der Füllstandradarantenne (306, 402) speichert;
wobei der Datenspeicher (405) eingerichtet ist, die Identifikationsdaten zum Identifizieren der Füllstandradarantenne (306, 402) an die Steuereinrichtung (301) des Füllstandradargeräts zu übertragen.

10. Verfahren zur adaptiven Sendeleistungseinstellung eines Füllstandradargeräts (102) nach einem der Ansprüche 1-8, aufweisend die Schritte:
Bestimmen der Abstrahlrichtung eines Sendesignals der Antenneneinrichtung (104) durch die Abstrahlwinkelbestimmungseinrichtung;
Einstellen einer Sendeleistung des Sendesignals auf Basis der Abstrahlrichtung und einer Abstrahlcharakteristik der Antenneneinrichtung durch die Steuereinrichtung (301);
Abstrahlen des Sendesignals in Richtung eines Füllguts mit der Antenneneinrichtung mit einer Sendeleistung von höchstens der maximal zulässigen Sendeleistung.

11. Programmelement, das, wenn es auf einer Steuereinrichtung (301) eines Füllstandradargeräts (102) nach einem der Ansprüche 1-8 ausgeführt wird, das Füllstandradargerät anleitet, die Schritte nach Anspruch 10 durchzuführen.

12. Computerlesbares Medium, auf dem ein Programmelement nach Anspruch 11 gespeichert ist.

## Claims

1. Level radar apparatus (102) configured for adaptive transmission power adjustment, comprising:
antenna means (104) configured to radiate a transmit signal toward a fill medium; radiation angle determining means (305) configured to determine the direction of radiation of the transmitted signal;
control means (301), **characterized in that** the control means is configured to adjust a transmission power of the transmission signal based on the radiation direction and a radiation characteristic of the antenna means.

2. Level radar apparatus (102) according to claim 1, further comprising:
a data memory (307) on which the radiation characteristic of the antenna device (104) or a calculation rule for calculating the radiation characteristic is stored.

3. Level radar device (102) according to claim 1 or 2, further comprising:
a communication interface (207);
wherein the control means (301) is configured to request the radiation pattern from an external device (208) via the communication interface.

4. Level radar apparatus (102) according to any one of the preceding claims, further comprising:
a recognition means (403, 404) arranged to identify the antenna device (104).

5. Level radar apparatus (102) according to claim 4,
wherein the recognition means (403, 404) comprises a data memory (405) attached to the antenna means (104) and storing identification data of the antenna means;
wherein the recognition device is configured to transmit the identification data to the control device (301) for identifying the antenna device.

6. Level radar apparatus (102) according to any one of the preceding claims, further comprising:
a position determining means (601) configured to determine the position of the level radar apparatus;
wherein the control means (301) is configured to adjust the maximum transmission power of the transmission signal based on the position of the level radar apparatus.

7. Level radar apparatus (102) according to any one of the preceding claims,
wherein the control means (301) is configured to adjust the maximum transmission power of the transmission signal based on the angle of the radiation direction of the transmission signal to the surface of the filling material.

8. Level radar apparatus (102) according to any one of the preceding claims,
wherein the radiation angle determining means (305) comprises a tilt sensor.

9. Level radar apparatus (102) according to any one of the preceding claims, comprising:
a level radar antenna (306, 402);
a data memory (405) attached to the level radar antenna and storing identification data of the level radar antenna;
wherein the data memory (405) is configured to transmit the identification data for identifying the level radar antenna (306, 402) to the control device (301) of the level radar apparatus.

10. Method for adaptive transmit power adjustment of a level radar (102) according to any one of claims 1 to 8, comprising the steps of:
Determining the direction of radiation of a transmit signal of an antenna means (104) by the radiation angle determining means;
Adjusting a transmission power of the transmission signal based on the radiation direction and a radiation characteristic of the antenna means by the control means (301);
Radiating the transmission signal toward a filling material by the antenna means with a transmission power of at most the maximum allowable transmission power.

11. Program element which, when executed on a control means (301) of a level radar apparatus (102), instructs the level radar apparatus to perform the steps of claim 10.

12. Computer-readable medium on which a program element according to claim 11 is stored.

## Revendications

1. Appareil radar de niveau de remplissage (102), configuré pour ajuster de manière adaptative la puissance d'émission, comportant :
un dispositif d'antenne (104), configuré pour rayonner un signal d'émission en direction d'un produit de remplissage ;
un dispositif de détermination d'angle de rayonnement (305), configuré pour déterminer la direction de rayonnement du signal d'émission ;
un dispositif de commande (301), **caractérisé en ce que** le dispositif de commande est configuré pour ajuster une puissance d'émission du signal d'émission sur la base de la direction de rayonnement et d'une caractéristique de rayonnement du dispositif d'antenne.

2. Appareil radar de niveau de remplissage (102) selon la revendication 1, comportant en outre :
une mémoire de données (307), sur laquelle est enregistrée la caractéristique de rayonnement du dispositif d'antenne (104) ou une règle de calcul pour calculer la caractéristique de rayonnement.

3. Appareil radar de niveau de remplissage (102) selon la revendication 1 ou 2, comportant en outre :
une interface de communication (207) ;
le dispositif de commande (301) étant configuré pour demander la caractéristique de rayonnement à un appareil externe (208) via l'interface de communication.

4. Appareil radar de niveau de remplissage (102) selon l'une des revendications précédentes, comportant en outre :
un dispositif de reconnaissance (403, 404), configuré pour identifier le dispositif d'antenne (104).

5. Appareil radar de niveau de remplissage (102) selon la revendication 4,
le dispositif de reconnaissance (403, 404) comportant une mémoire de données (405), qui est montée sur le dispositif d'antenne (104) et enregistre des données d'identification du dispositif d'antenne ;
le dispositif de reconnaissance étant configuré pour transmettre au dispositif de commande (301) les données d'identification pour identifier le dispositif d'antenne.

6. Appareil radar de niveau de remplissage (102) selon l'une des revendications précédentes, comportant en outre :
un dispositif de détermination de position (601), configuré pour déterminer la position de l'appareil radar de niveau de remplissage ;
le dispositif de commande (301) étant configuré pour ajuster la puissance d'émission maximale du signal d'émission sur la base de la position de l'appareil radar de niveau de remplissage.

7. Appareil radar de niveau de remplissage (102) selon l'une des revendications précédentes,
dans lequel le dispositif de commande (301) est configuré pour ajuster la puissance d'émission maximale du signal d'émission sur la base de l'angle de la direction de rayonnement du signal d'émission par rapport à la surface du produit de remplissage.

8. Appareil radar de niveau de remplissage (102) selon l'une des revendications précédentes,
dans lequel le dispositif de détermination d'angle de rayonnement (305) comporte un capteur d'inclinaison.

9. Appareil radar de niveau de remplissage (102) selon l'une des revendications précédentes, comportant :
une antenne de radar de niveau de remplissage (306, 402) ;
une mémoire de données (405), qui est montée sur l'antenne de radar de niveau de remplissage (306, 402) et enregistre des données d'identification de l'antenne de radar de niveau de remplissage (306, 402) ;
la mémoire de données (405) étant configurée pour transmettre au dispositif de commande (301) de l'appareil radar de niveau de remplissage les données d'identification pour identifier l'antenne de radar de niveau de remplissage (306, 402).

10. Procédé d'ajustement adaptatif de la puissance d'émission d'un appareil radar de niveau de remplissage (102) selon l'une des revendications 1 à 8, comportant les étapes consistant à :
déterminer la direction de rayonnement d'un signal d'émission du dispositif d'antenne (104) au moyen du dispositif de détermination d'angle de rayonnement ;
ajuster une puissance d'émission du signal d'émission sur la base de la direction de rayonnement et d'une caractéristique de rayonnement du dispositif d'antenne au moyen du dispositif de commande (301) ;
rayonner le signal d'émission en direction d'un produit de remplissage avec le dispositif d'antenne à une puissance d'émission égale tout au plus à la puissance d'émission maximale admissible.

11. Élément de programme qui, lorsqu'il est exécuté sur un dispositif de commande (301) d'un appareil radar de niveau de remplissage (102) selon l'une des revendications 1 à 8, amène l'appareil radar de niveau de remplissage à exécuter les étapes selon la revendication 10.

12. Support lisible par ordinateur, sur lequel est enregistré un élément de programme selon la revendication 11.
